(19) Europäisches Patentamt
European Patent Office
Office européen des brevets

(11) Veröffentlichungsnummer : **0 086 271**
**B1**

(12) # EUROPÄISCHE PATENTSCHRIFT

(45) Veröffentlichungstag der Patentschrift : **16.04.86**

(21) Anmeldenummer : **82111755.3**

(22) Anmeldetag : **17.12.82**

(51) Int. Cl.⁴ : **C 08 G 18/38**, C 08 G 18/28, C 08 G 18/80, C 08 L 75/04, C 08 G 18/50, C 08 K 5/54, C 09 K 3/10

(54) **Elastische Kunstharzmassen mit verbesserter Haftwirkung.**

(30) Priorität : **04.02.82 DE 3203687**

(43) Veröffentlichungstag der Anmeldung : **24.08.83 Patentblatt 83/34**

(45) Bekanntmachung des Hinweises auf die Patenterteilung : **16.04.86 Patentblatt 86/16**

(84) Benannte Vertragsstaaten : **AT BE CH DE FR GB IT LI NL SE**

(56) Entgegenhaltungen :
**US-A- 3 627 722**
**US-A- 3 632 557**
**Die Akte enthält technische Angaben, die nach dem Eingang der Anmeldung eingereicht wurden und die nicht in dieser Patentschrift enthalten sind.**

(73) Patentinhaber : **SCHERING AKTIENGESELLSCHAFT**
**Berlin und Bergkamen**
**Waldstrasse 14 Postfach 15 40**
**D-4709 Bergkamen (DE)**

(72) Erfinder : **Brinkmann, Bernd, Dr., Dipl.-Chem.**
**Am Gorbach 14**
**D-4717 Nordkirchen (DE)**
Erfinder : **Lucas, Hermann-Josef**
**Schlaunstrasse 20**
**D-4715 Ascheberg-Herbern (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 086 271 B1

**Beschreibung**

Elastische Kunstharzmassen als z. B. Klebe- und Dichtungsmassen für saugende und nichtsaugende Untergründe bzw. Oberflächen haben in den letzten Jahren insbesondere im Bauwesen zunehmend an Bedeutung erlangt. Während in früheren Jahren überwiegend Thiokol-Dichtungsmassen eingesetzt wurden, finden in jüngerer Zeit mehr Silikon- und Polyurethandichtungsmassen Verwendung.

Elastische Dichtungsmassen werden insbesondere als Fugendichtungsmassen zur Abdichtung von Fertigbau-Elementen und Sichtbeton-Flächen eingesetzt und müssen neben der eigentlichen Abdichtungsfunktion die erheblichen temperaturabhängigen Bewegungen ausgleichen. Dabei treten Zug-Dehnungskräfte auf, welche die Adhäsionsfläche erheblich belasten können. Weiterhin finden Dichtungsmassen als Abdichtungsmittel an Fensterkonstruktion zwischen Rahmenkonstruktion und Glas sowie Mauerwerk und Rahmenkonstruktion Verwendung, desgleichen im Sanitärbau.

Auch bei diesen Anwendungen werden hohe Anforderungen an das Adhäsionsvermögen der Dichtungsmassen gestellt.

Gutes Adhäsionsvermögen wird im allgemeinen dadurch erzielt, daß die zu verklebenden Substrate bzw. die abzudichtenden Oberflächen mit einem Speziallack, der sowohl zum Substrat als auch zu der Dichtungsmasse eine Verbindung eingeht und somit adhäsionsvermittelnd wirken kann, vorgestrichen werden.

Der Zweck dieser « Voranstriche » (Primer) besteht darin, überall dort eine Haftung zwischen Substrat und Dichtungsmasse herzustellen, die ohne ihre Anwendung nicht oder nur mangelhaft zustande käme.

Einerseits stellen diese Voranstriche eine zwingende Notwendigkeit für ein erfolgreiches Applizieren von Dichtungsmassen dar, andererseits wird ihre Anwendung aber von vielen Anwendern als aufwendig und lästig empfunden.

Eine Verbesserung sowohl der unzureichenden Haftung der Dichtungsmassen als auch bei der Anwendung wurde aber durch spezielle Additive erreicht, den sogenannten Haftvermittlern (z. B. US-A-3 632 557, 3 627 722). Hierbei handelt es sich im allgemeinen um spezielle siliciumorganische Verbindungen, die neben einer gegenüber dem Polymeren reaktiven Gruppe zwei oder drei an das Siliciumatom gebundene Alkoxy-Gruppen enthalten wie z. B.

$$(R'O)_3{-}Si{-}(CH_2{-}CH_2{-}CH_2)_a{-}Z$$

mit

R'O = Alkoxygruppe (z. B. Methoxy- oder Äthoxy-)
Z = eine funktionelle organische Gruppe
a = Eins

Die haftvermittelnde Wirkung wird nach z. Z. allgemein anerkannter Betrachtungsweise durch Reaktion der Additive sowohl mit dem Polymeren als auch mit dem Substrat erzielt. Die Reaktion zum Substrat, wie z. B. Glas, erfolgt über Hydrolyse der Si—OR'-Bindungen und Kondensation der Si—OH-Gruppe des Haftvermittlers mit einer Si—OH-Gruppe der z. B. Glasoberfläche. Daneben finden aber auch physikalische Wechselwirkungen mit der Oberfläche statt. Die Reaktion mit dem Polymeren erfolgt über die Reaktion der funktionellen organischen Gruppe Z mit der reaktiven Gruppe des Polymeren (vgl. defazet, Deutsche Farben-Zeitschrift, Sonderdruck aus Heft 5, S. 207-211).

Der Einsatz dieser Haftvermittler ist insofern einer Verwendung von haftvermittelnden Lackierungen vorzuziehen als dadurch der Arbeitsaufwand an der Baustelle erheblich eingeschränkt werden kann.

Die Wirkung dieser haftvermittelnden Zusätze entspricht insbesondere bei den Silikon- und Polyurethandichtungsmassen vielfach noch nicht den Anforderungen der Praxis.

So konnte insbesondere in Polyurethandichtungsmassen bislang nicht auf den Einsatz von haftvermittelnden Lacken verzichtet werden, da die üblichen Additive keine befriedigende Wirkung zeigten.

Aufgabe der vorliegenden Erfindung war es daher, elastische Kunstharzmassen zu entwickeln, die auch ohne Verwendung haftvermittelnder Lackierungen verbesserte Haftung auf den Substraten zeigen, wobei eine für die Praxis ausreichende Haftung zum Teil bereits innerhalb relativ kurzer Zeiten, d. h. innerhalb 24-48 Stunden, vorhanden ist.

Diese Aufgabe wurde dadurch gelöst, daß in den Kunstharzmassen auf vorzugsweise Polyurethanbasis anstelle der bekannten Trialkoxysilane erfindungsgemäß neuartige, oxyalkylgruppenhaltige Silane zugesetzt wurden.

Gegenstand der vorliegenden Erfindung sind daher elastische Kunstharzmassen auf Polyurethanbasis, enthaltend Haftvermittler auf Basis von oxyalkylgruppenhaltigen Silanen, die dadurch gekennzeichnet sind, daß als Haftvermittler Silane der allgemeinen Formel I

$$X-(CH_2)_n-\underset{\substack{|\\(OR^4)_q}}{\overset{\substack{R\\|}}{Si}}(OR^1)_p \qquad (I)$$

mit X = $-SH$, $-NHR^2$,

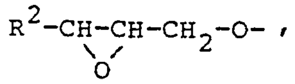

$-(NH-CH_2-CH_2)_{n'}NHR^2$, n' = 1 oder 2

R = $-CH_3$, $-CH_2-CH_3$, $-OR^1$,

$R^1 = -(CH_2-CH_2-O)-_mR^3$

$R^2$ = H oder ein gegebenenfalls substituierter aliphatischer und/oder cycloaliphatischer oder aromatischer Kohlenwasserstoffrest mit 1-10 C-Atomen

$R^3$ = gegebenenfalls substituierter Alkylrest mit 1-10 C-Atomen

$R^4$ = Alkylrest mit 1-4 C-Atomen

n = 1-8, m = 1-30, vorzugsweise 1-15, insbesondere 1-5

$p = \geqslant 1$, $q + p = \leqslant 2$

verwendet werden.

Ein weiterer Gegenstand der vorliegenden Erfindung ist dadurch gekennzeichnet, daß als Silane Addukte der Verbindungen der allgemeinen Formel I mit NCO-Gruppen enthaltenden monomeren und/oder präpolymeren Verbindungen verwendet werden, wobei die Addukte noch mindestens eine NCO-Gruppe enthalten.

Ein weiterer Gegenstand der vorliegenden Erfindung ist die Verwendung der elastischen Kunstharzmassen als Klebe- Dichtungs-, Beschichtungs-, Verguß, Spachtel-, Überzugsmassen und Lacke.

Die erfindungsgemäßen Haftvermittler können durch Umesterungsreaktion, wie sie z. B. in der DE-OS 15 45 080 beschrieben sind, aus z. B. Trimethoxysilanen erhalten werden.

Eine bevorzugte Ausführungsform der vorliegenden Erfindung ist dadurch gekennzeichnet, daß die erfindungsgemäßen Haftvermittler über ihre funktionelle Gruppe X an andere reaktive Komponenten addiert werden. Als reaktive Komponenten können all die Verbindungen gewählt werden, welche mit der Gruppe X eine Additionsreaktion eingehen, wie insbes. NCO-haltige Verbindungen. Bevorzugt werden aliphatische, cycloaliphatische und aromatische Di- oder Polyisocyanate, welche vorzugsweise unterschiedlich reaktive NCO-Gruppen aufweisen, wie z. B. im Isophorondiisocyanat oder präpolymere Di- oder Polyisocyanate, wie sie nach bekannten Methoden aus Isocyanaten und Polyäther- bzw. Polyesterpolyolen hergestellt werden, verwendet.

Das Verhältnis zwischen den erfindungsgemäßen Silanen und den reaktiven Komponenten wird vorzugsweise so gewählt, daß mindestens eine funktionelle Gruppe der reaktiven Komponente erhalten bleibt, d. h. z. B. im Verhältnis 1 : 2, bezogen auf die reaktive Gruppe X des Silans und die reaktiven Gruppen eines difunktionellen Isocyanats. Weist die reaktive Komponente k reaktive Gruppen (mit $n \geqq 2$) auf, so kann das Verhältnis zwischen 1 : k bis (k — 1) : n variieren. Insbesondere für die einkomponentigen Polyurethandichtungsmassen eignen sich die erfindungsgemäßen Haftvermittler.

Der optimale Anteil der mitverwendeten freien oder adduktierten Silanverbindungen ist in etwa abhängig von der Art der eingesetzten Verbindung und deren Molekulargewicht und kann durch einige orientierende Versuche leicht ermittelt werden. Allgemein haben sich Mengen von 1-10 Gew.-%, insbesondere 2-8 Gew.-%, bezogen auf die Gesamtformulierung, als ausreichend erwiesen.

Bei den Polyurethandichtungsmassen handelt es sich um marktübliche Systeme, die in ein- oder zweikomponentiger Form Verwendung finden und z. B. beschrieben sind in den DE-OSen 2 116 882, 2 521 841, 2 651 479, 2 718 393.

Hierbei handelt es sich um Umsetzungsprodukte von Polyolen mit überschüssigen Diisocyanaten, die gegebenenfalls verkappt sein können, und mit üblichen Füllstoffen, Weichmachern, Pigmenten und Thixotropierungsmitteln formuliert werden. Bei zweikomponentigen Dichtungsmassen werden im allgemeinen Diamine oder Polyole als Härter zugesetzt. In einkomponentiger Form können auch latente feuchtigkeitsempfindliche Härter vorhanden sein, wie z. B. Dienamine, Bisketimine oder Bisoxazolidine, die eine beschleunigte Reaktion mit der Luftfeuchtigkeit ermöglichen.

Als Polyole finden üblicherweise Polyätherpolyole Verwendung, die durch anionische Polymerisation, Copolymerisation und Blockcopolymerisation von Alkylenoxiden, wie Äthylenoxid, Propylenoxid und Butylenoxid, mit bis- oder polyfunktionellen Alkoholen, wie Butandiol-(1,4), 1,1,1-Trimethyloläthan, 1,1,1-Trimethylolpropan, Hexantriol-(1,2,6), Glycerin, Pentaerythrit und Sorbit, oder mit Aminen, wie Methylamin, Äthylendiamin und 1,6-Hexamethylendiamin, als Startkomponenten oder durch kationische Polymerisation und Copolymerisation cyclischer Äther, wie Tetrahydrofuran, Äthylenoxid und Propylenoxid, mit sauren Katalysatoren, wie Bortrifluoridätherat und durch Polykondensation von unter Wasserabspaltung polykondensierbaren Glykolen, wie Hexandiol-(1,6) in Gegenwart saurer Verätherungskatalysatoren, wie p-Toluolsulfonsäure, erhalten werden, sowie, z. B. im Hinblick auf eine Flammschutzwirkung, Oxalkylierungsprodukte der Phosphorsäure und phosphoriger Säuren, z. B. mit Äthylenoxid, Propylenoxid, Butylenoxid und Styroloxid. Als Polythioätherpolyole kommen vorzugsweise die Polykondensationsprodukte des Thiodiglykols mit sich und mit Diolen und/oder Polyolen, wie z. B. Hexandiol-(1,6), Triäthylenglykol, 2,2-Dimethyl-propandiol-(1,3) und 1,1,1-Trimethylolpropan, in Gegenwart saurer Verätherungskatalysatoren, wie Phosphorsäure und phosphorige Säure, in Betracht. Als Polyacetale seien vorzugsweise die Polykondensationsprodukte aus Formaldehyd und Diolen und/oder Polyolen, wie

Diäthylenglykol, Triäthylenglykol, Butandiol-(1,4), Hexandiol-(1,6), Thioglykol und 1,1,1-Trimethylolpropan, mit sauren Katalysatoren, wie Phosphorsäure und p-Toluolsulfonsäure, genannt. Als Polyesterpolyole sind vorzugsweise die Kondensationsprodukte mit Di- und/oder Polycarbonsäuren und Di- und/oder Polyolen, die durch Polykondensation z. B. von Adipinsäure, Phthalsäure, Tetrahydrophthalsäure, Hexahydrophthalsäure und Äthylenglykol, Butandiol-(1,4), Diäthylenglykol, Triäthylenglykol, Hexandiol-(1,6), 2,2-Dimethylpropandiol-(1,2,6) hergestellt werden, ferner Polycarbonate der genannten Di- und Polyole und Polyesteramide unter zusätzlicher Verwendung von Aminoalkoholen, wie z. B. α-Caprolacton geeignet.

Die genannten Polymerisations- und Polykondensationsprodukte werden in bekannter Weise mit Di- und/oder Polyisocyanaten in Isocyanatgruppen enthaltenden sogenannten Isocyanatprepolymere übergeführt. Nimmt man eine bestimmte zusätzliche Kettenverlängerungsreaktion über Urethangruppen in Kauf oder ist diese sogar erwünscht, so setzt man die hydroxylgruppenhaltigen Polymerisations- oder Polykondensationsprodukte gegebenenfalls zunächst bei 0 bis 25 °C und unter Kühlung und später gegebenenfalls über mehrere Stunden unter Erwärmung auf vorzugsweise 50 bis 120 °C in einem NCO/OH-Verhältnis von 1,5 bis 2,5 : 1, vorzugsweise 1,8 bis 2,2 : 1, mit den Di- oder Polyisocyanaten um. Ist eine Kettenverlängerungsreaktion nicht erwünscht, so verwendet man einen wesentlich größeren Überschuß an Di- bzw. Polyisocyanat, vorzugsweise für ein NCO/OH-Verhältnis von 3 bis 5 berechnet, verfährt im übrigen in derselben Weise wie bei den niedrigen NCO/OH-Verhältnissen und entfernt schließlich das überschüssige Di- bzw. Polyisocyanat, z. B. im Falle destillierbarer Di- bzw. Polyisocyanate durch Dünnschichtdestillation oder, bei nicht destillierbaren Isocyanaten, durch Lösungsmittelextraktion.

Als geeignete Di- oder Polyisocyanate seien z. B. genannt : Toluylendiisocyanat-(2,4) sowie dessen technische Gemische mit Toluylendiisocyanat-(2,6), Toluylendiisocyanat-(2,6), Diphenylmethandiisocyanat-(4,4'), 1,6-Hexamethylendiisocyanat, Dimerfettsäurediisocyanat, Naphthylendiisocyanat-(1,5), m-Xylylendiisocyanat-1-Methyl-2,4-diisocyanato-cyclohexan, Isophorondiisocyanat, 2,4,4-Trimethyl-1,6-diisocyanato-hexan, dimeres Toluylendiisocyanat-(2,4), N,N'-Di-(4-methyl-3-isocyanatophenyl)-harnstoff, N,N'-N''-Tri-(6-isocyanato-hexyl)-biuret, Triphenylmethantriisocyanat-(4,4',4''), das Umsetzungsprodukt aus 3 Mol Toluylendiisocyanat-(2,4) und 1 Mol 1,1,1-Trimethylolpropan, Tri- und Polymerisationsprodukte von Toluylendiisocyanat-(2,4), Mischtrimerisations- und Mischpolymerisationsprodukte von Toluylendiisocyanat-(2,4) und 1,6-Hexamethylendiisocyanat, Gemische isomerer Diphenylmethandiisocyanate, mehr als zwei jeweils über Methangruppen verknüpfte Benzolkerne enthaltende Polyisocyanate und Diisocyanate mit Diphenylmethanstruktur, deren Isocyanatgruppen teilweise in Carbodiimidgruppen übergeführt sind.

Die nach bekannten Verfahren aus den genannten Komponenten hergestellten Isocyanatgruppen aufweisenden Polymerisations- oder Polykondensationsprodukte können anschließend in bekannter Reaktion mit Phenolen, die durch $C_4$-$C_{18}$-Alkylreste substituiert sind, vorzugsweise in stöchiometrischen Mengen zu Carbamidsäurephenylestern umgesetzt werden. Diese Reaktion wird vorteilhaft bei höheren Temperaturen, vorzugsweise bei 50 bis 120 °C und gegebenenfalls unter Verwendung der in der Isocyanatchemie gebräuchlichen Katalysatoren, wie z. B. tert. Aminen und/oder Verbindungen des zwei- und vierwertigen Zinns, durchgeführt.

Die Herstellung der Isocyanatgruppen aufweisenden Polymerisations- und Polykondensationsprodukte kann in Substanz oder in gegenüber Isocyanaten inerten Lösungsmitteln durchgeführt werden. Nach beendeter Umsetzung werden gegebenenfalls verwendete Lösungsmittel durch Destillation, vorzugsweise durch Dünnschichtdestillation, entfernt. Es ist jedoch gegebenenfalls vorteilhaft, direkt die Lösungen der Isocyanatprepolymeren weiter zu verwenden.

Geeignete Lösungsmittel sind z. B. Ester, wie Äthylacetat, Butylacetat, Methyläthylketon, Methylisobutylketon, Aromaten wie Toluol, Xylol und höhere Aromatengemische, sowie Gemische der genannten Lösungsmittel.

Zur Herstellung der Isocyanatgruppen aufweisenden bi- und polyfunktionellen Polymerisations- oder Polykondensationsprodukte können gegebenenfalls die für Umsetzungen nach dem Isocyanatpolyadditionsverfahren gebräuchlichen hydroxylgruppenhaltigen Kettenverlängerungsmittel mitverwendet werden. Neben einer Kettenverlängerungsreaktion ist es z. B. mit Hilfe polyfunktioneller Kettenverlängerungsmittel möglich, an sich nur bifunktionelle Polymerisations- und Polykondensationsprodukte über Urethangruppen zu verzweigen. Durch den bei der Verwendung von Kettenverlängerungsmitteln erhöhten Gehalt an Urethangruppen läßt sich gegebenenfalls die Viskosität der Isocyanatprepolymeren im wünschenswerten Maße heraufsetzen.

Als Kettenverlängerungsmittel kommen hierzu vorzugsweise hydroxylgruppenhaltige Verbindungen, wie z. B. Butandiol-(1,4), 1,1,1-Trimethylolpropan und Hydrochinon-di-(2-hydroxyäthyläther), in Betracht.

Als Katalysatoren, die in Mengen von 0,001 bis 2 % verwendet werden können, kommen z. B. Diazabicyclooctan, Dibutylzinndilaurat und Zinn(II)-octoat in Frage.

Als Härtungsmittel für die Isocyanatgruppen aufweisenden Produkte werden insbesondere die in den DE-OSen 2 116 882, 2 521 841, 2 651 479, 2 718 393 beschriebenen Enamine, Enamin- und Aldimin- bzw. Ketimingruppen enthaltenden Verbindungen für die einkomponentigen Mischungen bevorzugt.

Für Zweikomponentensysteme können die auf diesem Gebiet üblichen und bekannten Härtungsmittel verwendet werden.

Zur Herstellung der Kunstharzmassen können weiterhin auf diesem Gebiet übliche inerte Füllstoffe, Pigmente, Farbstoffe, Weichmacher, Verdickungsmittel, Thixotropierungsmittel, Lösungsmittel und Streckmittel wie mit Isocyanat nicht reaktive Teere, Teerpeche, Asphalte oder Kunststoffe wie Polyolefine, Vinylkunststoffe, Polyamide mitverwendet werden. Als Füllstoffe werden Sande, Gesteinsmehl, Calciumcarbonat und insbesondere hydrophobierte Kieselsäuren und als Lösungsmittel gegebenenfalls substituierte Kohlenwasserstoffe oder Ketone bevorzugt.

Zur Beschleunigung der Härtung können organische oder anorganische Säuren in geringen Mengen als Katalysatoren zugegeben werden.

Die erfindungsgemäßen Kunstharzmassen werden vorzugsweise als elastische Klebe- und Dichtungsmassen für saugende und nichtsaugende Untergründe bzw. Oberflächen insbesondere auf dem Bausektor eingesetzt.

A Herstellung der erfindungsgemäßen Silanverbindungen

Beispiel 1

Umesterung von γ-Aminopropyltrimethoxysilan mit Diäthylenglykolmonomethyläther.

In einer Standapparatur, die mit Innenthermometer, Rückflußkühler mit Calciumchlorid-Rohr und Rührer versehen ist, wurden 412 g (2,3 Mol) γ-Aminopropyltrimethoxysilan vorgelegt und 1 242 g (10,35 Mol = 50 % Überschuß) Diäthylenglykolmonomethyläther zugemischt. Der Reaktionsansatz wurde zwei Stunden am Rückfluß erhitzt, wobei die Siedetemperatur bei etwa 110 °C lag.

Nach Abkühlen des Reaktionsansatzes wurde der Rückflußkühler durch eine Destillationsbrücke ersetzt. Zunächst wurde bei Normaldruck der bei der Reaktion freigesetzte Methylalkohol und anschließend, nach erneutem Abkühlen, im Vakuum von etwa 10 mbar nicht umgesetzter Diäthylenglykolmonomethyläther bis zu einer Innentemperatur von 130 °C abdestilliert.

Es wurden 979 g eines Rohproduktes erhalten, das noch etwa 13 Gew.-% Diäthylenglykolmonomethyläther enthielt. Das Umesterungsprodukt besteht zu etwa 75 % aus dem Tris-2-(2-Methoxy-äthoxy)-äthoxy)-silyl-3-aminopropan der Formel $H_2N—CH_2—CH_2—CH_2—Si—[O(—CH_2—CH_2—O)—CH_3]_3$, die durch Gaschromatographie und Massenspektrometrie bestätigt wurde. Daneben wurden überwiegend die korrespondierenden Mono- und Di-(2-(2-methoxy-äthoxy))-silyl-Verbindungen erhalten.

Beispiel 2

Umesterung von n-Methyl-γ-aminopropyltrimethoxysilan mit Diäthylenglykolmonomethyläther.

Wie im Beispiel 1 wurden 290 g (1,5 Mol) n-Methyl-γ-aminopropyltrimethoxysilan mit 810 g (6,75 Mol = 50 % Überschuß) Diäthylenglykolmonomethyläther umgeestert. Der Reaktionsansatz wurde während zwei Stunden am Rückfluß erhitzt. Die Siedetemperatur lag zu Beginn bei 115 °C und fiel im Verlauf der Reaktion auf 105 °C ab.

Nach erfolgter Umsetzung wurde analog Beispiel 1 der freigesetzte Alkohol und der Glykoläther bis zu einer Sumpftemperatur von 130 °C abdestilliert. Das in einer Menge von 658 g anfallende Rohprodukt bestand zu etwa 67 % aus Tris-(2-(2-methoxy-äthoxy)-äthoxy)-silyl-3-(n-methyl)-aminopropan der Formel $CH_3—NH—(CH_2)_3—Si—[O(—CH_2—CH_2—O)_2—CH_3]_3$, die gaschromatographisch und massenspektrometrisch bestätigt wurde. Das Rohprodukt enthielt ferner etwa 70 g nicht abdestillierten Glykoläther und partiell umgeesterte Produkte.

Beispiel 3

Umesterung von γ-Merkaptopropyltrimethoxysilan mit Diäthylenglykolmonomethyläther.

Wie im Beispiel 1 wurden 157 g (0,8 Mol) γ-Merkaptopropyltrimethoxysilan mit 432 g (3,6 Mol = 50 % Überschuß) Diäthylenglykolmonomethyläther umgeestert. Der Reaktionsansatz wurde während zwei Stunden am Rückfluß erhitzt. Die Reaktion wurde mit 1 g Äthyltitanat katalysiert. Die Siedetemperatur lag bei 106 °C.

Die Abdestillation des abgespaltenen Methanols und des Glykoläthers erfolgte unter den gleichen Bedingungen wie im Beispiel 1 mit dem Unterschied, daß beim Abdestillieren des Glykoläthers die Innentemperatur bis 140 °C gesteigert wurde. Es wurden 353 g eines Rohproduktes erhalten, das zu etwa 85 Gew.-% aus Tris-(2-(2-methoxy-äthoxy-äthoxy))-silyl-3-merkaptopropan der Formel $HS—(CH_2)_3—Si—[O—(CH_2—CH_2—O)_2—CH_3]_3$ bestand, die gaschromatographisch bestätigt wurde. Das Rohprodukt enthielt fernerhin noch etwa 35 g Glykoläther.

Beispiel 4

Umesterung von γ-Glycidyloxypropyltrimethoxysilan mit Diäthylenglykolmonomethyläther.

In der in Beispiel 1 genannten Apparatur wurden 118 g (0,5 Mol) γ-Glycidyloxypropyltrimethoxysilan mit 180 g (1,5 Mol) Diäthylenglykolmonomethyläther während 8 Stunden in Gegenwart von 1 g Äthyltitanat als Katalysator bei 70 °C gerührt. Der dabei freiwerdende Methylalkohol sowie überschüssiger

Glykoläther wurden anschließend, nach Abkühlen auf Raumtemperatur und Austausch des Rückflußkühlers durch eine Destillationsbrücke, im Vakuum von 10 mbar abdestilliert. Die Innentemperatur wurde dabei nur bis auf 75 °C erhöht und bei dieser Temperatur während einer Stunde gehalten. Es wurde ein Rohprodukt mit einer Ausbeute von 98 Gew.-% erhalten.

Diese technischen Produkte können auch in destillierter Form eingesetzt werden.

In Anlehnung an diese Verfahren wurden weiterhin folgende Silane hergestellt:

| Beispiel | Umesterungsprodukt aus |
|---|---|
| 5 | γ-Aminopropyltrimethoxysilan u. Äthylcellosolve |
| 6 | γ-Aminopropylmethyldiäthoxysilan u. Methyldiglykol |
| 7 | γ-Merkaptopropyltrimethoxysilan u. Äthylglykol |
| 8 | γ-Aminopropyltriäthoxysilan u. Äthyltriglykol |
| 9 | γ-Aminopropyltrimethoxysilan u. Äthyltriglykol |
| 10 | γ-Aminopropyltrimethoxysilan u. Äthyldiglykol |
| 11 | γ-Aminopropyltrimethoxysilan u. Methylpolyglykol |

B Herstellung von Isocyanataddukten aus den erfindungsgemäßen Silanen

Beispiel 1

In einem Rundkolben mit Rührer werden unter Stickstoff

84,6 g Isophorondiisocyanat (IPDI) vorgelegt und aus einem Tropftrichter innerhalb von 3,5 Std. unter Rühren

150 g des Silanes A 1 zugetropft.

Das Reaktionsgemisch zeigt einen Isocyanatgehalt von 7,1 %.

Nach derselben Vorgehensweise wurden folgende Isocyanataddukte hergestellt (durch Umsetzung im Molverhältnis 1 : 1):

| Beispiel | eingesetztes Silan nach Beispiel A | eingesetztes Isocyanat | gef. Isocyanatgehalt in % |
|---|---|---|---|
| 2 | 5 | Isophorondiisocyanat | 7,8 |
| 3 | 2 | " | 6,9 |
| 4 | 6 | " | 8,3 |
| 5 | 7 | " | 7,7 |
| 6 | 8 | " | 6,1 |
| 7 | 9 | " | 4,7 |
| 8 | 10 | " | 6,9 |
| 9 | 1 | " 1) | 1,45 |
| 10 | 1 | " 2) | 0,6 |

1) präpolymeres Isocyanat, hergestellt aus einem difunktionellen Polypropylenglykol (OH-Z 56) und IPDI im Verhältnis 1 : 2

2) präpolymeres Isocyanat, hergestellt aus einem trifunktionellen Polypropylenglykol (OH-Z 35,6) und IPDI im Verhältnis 1 : 3

(Siehe Tabelle Seite 7 f.)

| Vergleichsbeispiel | eingesetztes Silan | eingesetztes Isocyanat | Molverhältnis Silan : Isocyanat | gef. Isocyanatgehalt in % |
|---|---|---|---|---|
| 1 | γ-Aminopropyltrimethoxysilan | Isophorondiisocyanat | 1 : 1 | 10,5 |
| 2 | γ-Merkaptopropyltrimethoxysilan | " | 1 : 1 | 10,1 |

C Herstellung von Polyurethandichtungsmassen

Im 8 1-Topf eines marktüblichen Planetenmischers mit Vakuumanschluß werden folgende Komponenten eingewogen :

80 g eines linearen Isocyanatpräpolymeren auf Basis Polypropylenglykol, mit aliphatischen Isocyanatgruppen (NCO-Gehalt 3,4 %)
205 g eines verzweigten Isocyanatpräpolymeren auf Basis von Polypropylenglykol, mit aliphatischen Isocyanatendgruppen (NCO-Gehalt 2,7 %)
100 g hochdisperse Kieselsäure
550 g Diisodecylphthalat
380 g Kreide
100 g Shellsol T
20 g Silan-Isocyanat-Addukt nach Beispiel B1
120 g eines latenten Aminhärters, Aminzahl 82 (Herstellung nach DE-PS 2 521 841)

und insgesamt 40 Minuten lang verknetet, wobei zum Schluß 10 Minuten lang unter Vakuum von 20 Torr entgast wird.

D Abprüfung der Dichtungsmassen

Beispiel 1

Prüfung der Haftung auf Glas
Auf eine Glasplatte werden Proben in Form eines ca. 5 cm langen Stranges aufgebracht und bei Normklima gelagert.
In Abständen von jeweils einem Tag wird mit der Hand versucht, den Strang abzulösen. Die Bewertung erfolgt nach Kohäsionsbruch (K) oder Adhäsionsbruch (A) :
Nach derselben Vorgehensweise wurden die folgenden Dichtungsmassen abgeprüft :

| Dichtungsmasse nach Beispiel C unter Zusatzes des Haftvermittlers nach Beispiel | | Lagerzeit bei Normklima in Tagen | | | |
|---|---|---|---|---|---|
| | | 1 | 5 | 10 | 18 |
| A | 4 | K | K | K | K |
| B | 1 | K | K | K | K |
| " | 3 | K | K | K | K |
| " | 5 | A | A | K | K |
| " | 7 | K | K | K | K |
| Vergleichsbeispiel | | | | | |
| | 1 | A | A | A | A |
| | 2 | A | A | A | A |

E Prüfung der Haftung auf Beton

Zwei Betonkörper aus Zementmörtel mit den Abmessungen 50 × 15 × 25 mm werden im Abstand von 15 mm nebeneinander fixiert. In die entstandene Fuge wird die mit dem Silanadditiv versehene Dichtungsmasse blasenfrei eingebracht.

Die Oberfläche wird glatt und bündig mit der Oberfläche der Betonkörper abgezogen.

Nach 14tägiger Lagerung unter Normklima wird der Zugversuch durchgeführt (nach DIN 52455). Die Zugspannung in Newton/$cm^2$, bei der Adhäsionsbruch erfolgt, ist Maßstab für die Haftung der Dichtungsmasse.

Nach derselben Vorgehensweise wurden die folgenden Dichtungsmassen abgeprüft :

| Dichtungsmasse mit Silan nach Beispiel | | Bruchdehnungs-spannung N/$cm^2$ | Bruchart * |
|---|---|---|---|
| A | 4 | 64,0 | A |
| B | 1 | 54;7 | A |
| " | 2 | 76 | K |
| " | 3 | 57 | A |
| " | 4 | 52 | A |
| " | 5 | 52,4 | A |
| " | 6 | 53 | A |
| " | 7 | 55,6 | A |
| " | 8 | 52,9 | A |

| Dichtungsmasse mit Silan nach Beispiel B | Bruchdehnungs-spannung N/$cm^2$ | Bruchart * |
|---|---|---|
| Vergleichsbeispiele | | |
| 1 Dichtungsmasse ohne Silanadditiv | 0 | A |
| 2 Dichtungsmasse mit $\gamma$-Merkapto-propyltrimethoxy-silan | 25 | A |

A = Adhäsionsbruch
K = kohäsionsbruch

**Patentansprüche** (für die Vertragsstaaten : BE, CH, DE, FR, GB, IT, LI, NL, SE)

1. Elastische Kunstharzmassen auf Polyurethanbasis, enthaltend Haftvermittler auf Basis von oxyalkylgruppenhaltigen Silanen, dadurch gekennzeichnet, daß als Haftvermittler Silane der allgemeinen Formel I

$$X-(CH_2)_n-\underset{(OR^4)_q}{\overset{R}{Si}}(OR^1)_p \qquad (I)$$

mit X = —SH, —NHR², 

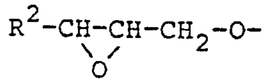

—$(NH—CH_2—CH_2)_{n'}NHR^2$

n' = 1 oder 2

R = —$CH_3$, —$CH_2$—$CH_3$, —$OR^1$

$R^1$ = —$(CH_2—CH_2—O)—_mR^3$

$R^2$ = H oder ein gegebenenfalls substituierter aliphatischer und/oder cycloaliphatischer oder aromatischer Kohlenwasserstoffrest mit 1-10 C-Atomen

$R^3$ = gegebenenfalls substituierter Alkylrest mit 1-10 C-Atomen

$R^4$ = Alkylrest mit 1-4 C-Atomen

n = 1-8

m = 1-30

p = $\geqslant$ 1

q + p = $\leqslant$ 2

verwendet worden sind.

2. Elastische Kunstharzmassen gemäß Anspruch 1, dadurch gekennzeichnet, daß als Silane Addukte der Verbindungen der allgemeinen Formel I mit NCO-Gruppen enthaltenden monomeren und/oder präpolymeren Verbindungen verwendet worden sind, wobei die Addukte noch mindestens eine NCO-Gruppe enthalten.

3. Haftvermittler für die elastischen Kunstharzmassen gemäß Anspruch 2, bestehend aus Addukten der Silane der Formel I, hergestellt durch Umsetzung der Silane mit NCO-Gruppen enthaltenden monomeren und/oder präpolymeren Verbindungen in einem Mengenverhältnis, daß mindestens eine NCO-Gruppe erhalten bleibt.

4. Verwendung der elastischen Kunstharzmassen gemäß den Ansprüchen 1 + 2 als Klebe-, Dichtungs-, Beschichtungs-, Verguß-, Spachtel-, Überzugsmassen und Lacke.

**Patentansprüche** (für den Vertragsstaat AT)

1. Verfahren zur Herstellung von elastischen Kunstharzmassen auf Polyurethanbasis nach an sich bekannten Bedingungen, enthaltend Haftvermittler auf Basis von oxyalkylgruppenhaltigen Silanen, dadurch gekennzeichnet, daß als Haftvermittler Silane der allgemeinen Formel I

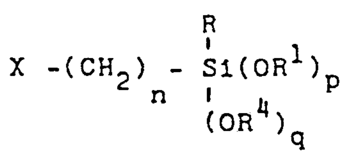
(I)

mit X = —SH, —NHR², 

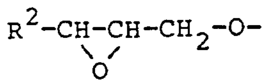

—$(NH—CH_2—CH_2)_{n'}NHR^2$

n' = 1 oder 2

R = —$CH_3$, —$CH_2$—$CH_3$, —$OR^1$

$R^1$ = —$(CH_2—CH_2—O)—_mR^3$

$R^2$ = H oder ein gegebenenfalls substituierter aliphatischer und/oder cycloaliphatischer oder aromatischer Kohlenwasserstoffrest mit 1-10 C-Atomen

$R^3$ = gegebenenfalls substituierter Alkylrest mit 1-10 C-Atomen

$R^4$ = Alkylrest mit 1-4 C-Atomen

n = 1-8

m = 1-30

p = $\geqslant$ 1

q + p = $\leqslant$ 2

verwendet werden.

2. Verfahren zur Herstellung von elastischen Kunstharzmassen gemäß Anspruch 1, dadurch gekennzeichnet, daß als Silane Addukte der Verbindungen der allgemeinen Formel I mit NCO-Gruppen enthaltenden monomeren und/oder präpolymeren Verbindungen verwendet werden, wobei die Addukte noch mindestens eine NCO-Gruppe enthalten.

3. Verfahren zur Herstellung von Haftvermittlern für die elastischen Kunstharzmassen gemäß

Anspruch 2, bestehend aus Addukten der Silane der Formel I, hergestellt durch Umsetzung der Silane mit NCO-Gruppen enthaltenden monomeren und/oder präpolymeren Verbindungen in einem Mengenverhältnis, daß mindestens eine NCO-Gruppe enthalten bleibt.

4. Verwendung der elastischen Kunstharzmassen gemäß den Ansprüchen 1 und 2 als Klebe-, Dichtungs-, Beschichtungs-, Verguß-, Spachtel-, Überzugsmassen und Lacke.

**Claims** (for the Contracting States : BE, CH, DE, FR, GB, IT, LI, NL, SE)

1. Elastic polyurethane-based synthetic resin compositions containing a coupling agent based on alkoxy-substituted silanes, characterised in that as the coupling agent silanes of the general formula I

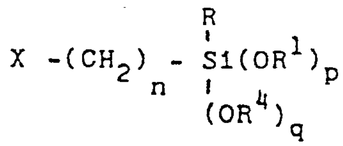

(I)

with X = —SH, —$NHR^2$,

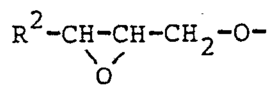

—$(NH—CH_2—CH_2)_{n'}NHR^2$

n' = 1 or 2

R = —$CH_3$, —$CH_2$—$CH_3$, —$OR^1$

$R^1$ = —$(CH_2—CH_2—O)_m$—$R^3$

$R^2$ = H or an optionally-substituted aliphatic and/or cycloaliphatic or aromatic hydrocarbon radical with 1-10 C atoms

$R^3$ = optionally-substituted alkyl radical with 1-10 C atoms

$R^4$ = alkyl radical with 1-4 C atoms

n = 1-8

m = 1-30

$p \geqslant 1$

$q + p \leqslant 2$

have been used.

2. Elastic synthetic resin compositions according to claim 1, characterised in that as the silanes adducts of compounds of the general formula I with monomeric and/or prepolymeric compounds containing NCO groups have been used wherein the adducts still contain at least one NCO group.

3. Coupling agent for elastic synthetic resin compositions according to claim 2, consisting of adducts of the silanes of formula I, prepared by the reaction of the silane with monomeric and/or prepolymeric compounds containing NCO groups in a proportion such that at least one NCO group is preserved.

4. Use of the elastic synthetic resin compositions according to claims 1 and 2 as adhesives, sealers, coatings, fillers, surfacers, coverings and lacquers.

**Claims** (for the Contracting State AT)

1. Process for the preparation of an elastic polyurethane-based synthetic resin composition containing a coupling agent based on alkoxy-substituted silanes, characterised in that as the coupling agent silanes of the general formula I

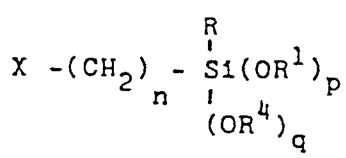

(I)

with X = —SH, —$NHR^2$,

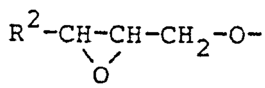

—$(NH—CH_2—CH_2—)_{n'}NHR^2$

$n' = 1$ or 2
$R = -CH_3, -CH_2-CH_3, -OR^1$
$R^1 = -(CH_2-CH_2-O)_m-R^3$
$R^2$ = H or an optionally-substituted aliphatic and/or cycloaliphatic or aromatic hydrocarbon radical with 1-10 C atoms
$R^3$ = optionally-substituted alkyl radical with 1-10 C atoms
$R^4$ = alkyl radical with 1-4 C atoms
$n = 1\text{-}8$
$m = 1\text{-}30$
$p > 1$
$q + p < 2$
are used.

2. Process for the preparation of an elastic synthetic resin composition according to claim 1, characterised in that as the silanes adducts of compounds of the general formula I with monomeric and/or prepolymeric compounds containing NCO groups are used wherein the adducts still contain at least one NCO group.

3. Process for the preparation of a coupling agent for elastic synthetic resin compositions according to claim 2, consisting of adducts of the silanes of formula I, prepared by the reaction of the silane with monomeric and/or prepolymeric compounds containing NCO groups in a proportion such that at least one NCO group is preserved.

4. Use of the elastic synthetic resin compositions according to claims 1 and 2 as adhesives, sealers, coatings, fillers, surfacers, coverings and lacquers.

**Revendications** (pour les Etats contractants : BE, CH, DE, FR, GB, IT, LI, NL, SE)

1. Matières élastiques à base de résines synthétiques de polyuréthannes qui renferment des adjuvants d'adhérence à base de silanes porteurs de radicaux alkylène-oxy et qui sont caractérisées en ce qu'elles contiennent, comme adjuvants d'adhérence, des silanes répondant à la formule générale I :

$$X-(CH_2)_n-\overset{R}{\underset{(OR^4)_q}{Si}}(OR^1)_p \qquad (I)$$

dans laquelle X représente un radical $-SH$, $-NHR^2$,

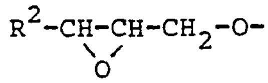

ou $-(NH-CH_2-CH_2)_{n'}NHR^2$, l'indice n' étant égal à 1 ou à 2,
R représente un radical $-CH_3$, $-CH_2-CH_3$ ou $-OR^1$,
$R^1$ représente un radical $-(CH_2-CH_2-O)_m-R^3$,
$R^2$ représente l'hydrogène ou un radical hydrocarboné aliphatique et/ou cycloaliphatique ou aromatique contenant de 1 à 10 atomes de carbone, éventuellement substitué,
$R^3$ représente un radical alkyle contenant de 1 à 10 atomes de carbone, éventuellement substitué,
$R^4$ représente un radical alkyle contenant de 1 à 4 atomes de carbone,
n est un nombre de 1 à 8,
m est un nombre de 1 à 30,
p est supérieur ou égal à 1 et
p + q est inférieur ou égal à 2.

2. Matières élastiques à base de résines synthétiques selon la revendication 1, matières caractérisées en ce qu'elles contiennent, comme silanes, des produits résultant de l'addition de composés de formule générale I avec des composés monomères et/ou prépolymères contenant des radicaux —NCO, ces produits d'addition renfermant encore au moins un radical —NCO.

3. Adjuvants d'adhérence pour matières élastiques à base de résines synthétiques selon la revendication 2, adjuvants constitués de produits d'addition de silanes de formule I que l'on a préparés en faisant réagir les silanes avec des composés monomères et/ou prépolymères contenant des radicaux —NCO, dans un rapport molaire tel qu'il subsiste encore au moins un radical —NCO.

4. Application des matières élastiques à base de résines synthétiques selon l'une des revendications 1 et 2 comme matières adhésives, matières d'étanchéité, matières pour enduction, matières à couler, matières à appliquer à la racle, matières de revêtement et peintures.

**Revendications** (pour l'Etat contractant AT)

1. Procédé de préparation de matières élastiques à base de résines synthétiques en polyuréthannes qui contiennent des adjuvants d'adhérence à base de silanes porteurs de radicaux alkylène-oxy, selon des conditions connues, procédé caractérisé en ce qu'on utilise, comme adjuvants d'adhérence, des silanes répondant à la formule générale I :

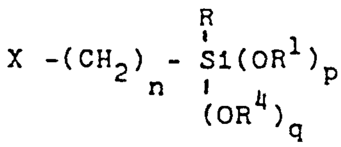

(I)

dans laquelle X représente un radical —SH, —$NHR^2$,

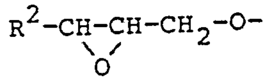

ou —$(NH—CH_2—CH_2)_{n'}NHR^2$, l'indice n' étant égal à 1 ou à 2,

R représente un radical —$CH_3$, —$CH_2$—$CH_3$ ou —$OR^1$,

$R^1$ représente un radical —$(CH_2—CH_2—O)_m—R^3$,

$R^2$ représente l'hydrogène ou un radical hydrocarboné aliphatique et/ou cycloaliphatique ou aromatique contenant de 1 à 10 atomes de carbone, éventuellement substitué,

$R^3$ représente un radical alkyle contenant de 1 à 10 atomes de carbone, éventuellement substitué,

$R^4$ représente un radical alkyle contenant de 1 à 4 atomes de carbone,

n est un nombre de 1 à 8,

m est un nombre de 1 à 30,

p est supérieur ou égal à 1 et

p + q est inférieur ou égal à 2.

2. Procédé de préparation de matières élastiques à base de résines synthétiques selon la revendication 1, procédé caractérisé en ce qu'on utilise, comme silanes, des produits d'addition de composés de formule générale I avec des composés monomères et/ou prépolymères contenant des radicaux —NCO, ces produits d'addition renfermant encore au moins un radical —NCO.

3. Procédé de préparation d'adjuvants d'adhérence pour les matières élastiques à base de résines synthétiques selon la revendication 2, constitués de produits d'addition de silanes de formule I, par réaction des silanes avec des composés monomères et/ou prépolymères contenant des radicaux —NCO, en un rapport tel qu'il subsiste encore au moins un radical —NCO.

4. Application des matières élastiques à base de résines synthétiques selon l'une des revendications 1 et 2 comme matières adhésives, matières d'étanchéité, matières d'enduction, matières à couler, matières à appliquer à la racle, matières de revêtement et peintures.